# EUROPEAN PATENT SPECIFICATION

(11) **EP 0 546 699 B1**
(45) Date of publication and mention of the grant of the patent: **12.03.1997**
(21) Application number: 92310512.6
(22) Date of filing: 18.11.1992
(51) Int. Cl.: C04B 40/00

(54) **Packaging and dispensing system for fluid and semi-fluid cement admixtures**
Verpackungs- und Abgabesystem für flüssige und halbflüssige Zementzusatzmittel
Système de conditionnement et de distribution d'additifs de ciment fluides ou semi-fluides

(30) Priority: 18.11.1991 US 793775; 31.01.1992 US 829991
(43) Date of publication of application: 16.06.1993
(73) Proprietor: W.R. Grace & Co.-Conn., New York, New York 10036 (US)
(72) Inventor: De Mars, John O., Wilmington, Massachusetts 01887 (US); Kay, Eliot, Moorestown, New Jersey 08057 (US); Grogan, Kevin William, Salem, Massachusetts 01970 (US); Belko, Stephen Patrick, Blackwood, New Jersey 08012 (US)
(74) Representative: Bentham, Stephen

(56) References cited:
- DE-A- 2 059 212
- DE-A- 2 200 163
- FR-A- 2 369 969
- US-A- 3 600 312
- CHEMICAL ABSTRACTS, vol. 104, no. 6, February 1986, Columbus, Ohio, US; abstract no. 38841d, NODA PLYWOOD page 320 ; & JP-A-60028776
- CHEMICAL ABSTRACTS, vol. 84, no. 14, 5 April 1976, Columbus, Ohio, US; abstract no. 94695q, M. TANABE ET AL. page 312 ; & JP-A-50126715
- CHEMICAL ABSTRACTS, vol. 112, no. 22, 28 May 1990, Columbus, Ohio, US; abstract no. 203781j, M. IIZUKA ET AL. page 330 ; & JP-A-01 270548

## Description

This invention relates to concrete and cement additives useful for various purposes, such as entraining air, and in particular, a packaging system therefor which allows for ease in dispensing and distributing the additives into cementitious compositions.

Admixtures are known in the art as materials used as ingredients in cementitious compositions to modify some property or properties of the cementitious compositions before, during or after the cementitious compositions have been formulated. Set retarding agents, accelerators, water reducers, superplasticizers and air-entraining agents are typical admixtures commonly used in the industry.

The successful use of admixtures depends in part upon the amount used for any given batch of cementitious mixture. Excess or insufficient amounts added to the mix may deleteriously affect the properties of the mix, and often result in considerable waste, not only of the admixture proper, but of the improperly dosed mix as well.

Conventional techniques for dispensing semi-fluid or fluid admixtures into cementitious compositions generally require extensive apparatus, which is costly, time-consuming and labor-intensive. In addition, use of such apparatus can result in spills, the generation of fumes, and may result in workers physically contacting the admixture, which can be undesirable. Most materials used as admixtures for cementitious mixtures are in aqueous, highly fluid states or in solid or powdered states. Semi-fluid admixture materials that have high viscosity at temperatures of -1 to 38°C (30-100°F) are especially difficult to dispense into cementitious mixtures. One mechanism for metering such admixtures is a bulk blending station including bulk tanks, pump motors, electromagnetic meters, calibrated sight vessels, and necessary hoses.

In the case of solid or powdered admixtures, typically the dispensing involves manually introducing loose admixtures into the cementitious mixture by mass or volumetric measurement. Another device involves water-soluble containers that envelop solid or powdered material, and the containers dissolve and release their contents while being blended into the wet cementitious mixture. For example, U.S. Patent No. 4,961,790 to Smith et al. discloses a device comprising a solid or powdered concrete admixture contained in a water-soluble container. When the container is introduced into a wet mixer and agitated, the water-soluble container is dissolved and the contents are thereby released into the mixer.

However, there is currently no viable packaging and dispensing technique for concrete admixtures that addresses the problem of dispensing admixtures that are in a semi-fluid or fluid state into cementitious mixtures without the use of extensive apparatus, or without the high probability that admixtures may spill in transit.

DE-A-2,200,163 and Chemical Abstracts vol. 84, 94695 and vol. 104, 38841 disclose building materials which incorporate microcapsules containing adjuvants, set accelerators, and hardening agents.

The present invention provides an encapsulated semi-fluid or fluid admixture for cementitious compositions, comprising a capsule body formed of a wax which is inert to the admixture, and which allows for the emission of admixture into a cementitious mixture when placed in mixture and subjected to mechanical agitation therein and a semi-fluid or fluid admixture contained within capsule body. The capsule may rupture, shatter or disintegrate as a result of the mechanical agitation, combined with exposure to the cementitious mixture, with resultant dispensing of the admixture into the cementitious system. The encapsulation material is chosen to be such that it is not deleterious to the desired characteristics of the cementitious mixture.

The present invention also contemplates a method of dispensing a semi-fluid or fluid admixture into a cementitious composition, which method comprises introducing into the cementitious composition a capsule formed of a wax containing the admixture and inert thereto and providing sufficient agitation to cause the emission of the admixture from the capsule and into the cementitious composition.

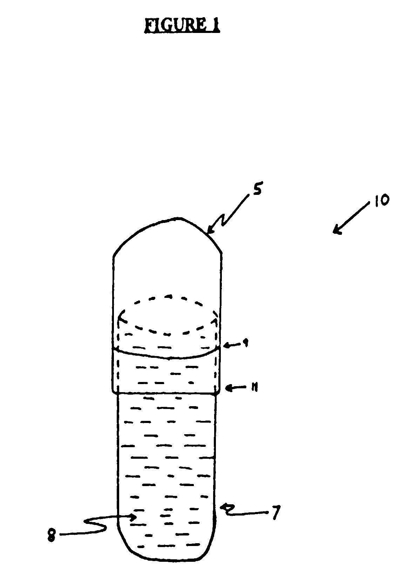

Figure 1 illustrates an encapsulated semi-fluid admixture in accordance with the present invention.

The various semi-fluid and fluid admixtures that can be used in accordance with the present invention include, but are not limited to, admixtures that entrain air, detrain air, increase workability, retard setting, accelerate setting, inhibit corrosion, etc. Those skilled in the art will recognize the applicability of the instant invention to a plethora of fluid, semi-fluid, or solid admixtures useful for many purposes.

Turning now to Figure 1, there is shown generally at 10 a closed package such as a capsule having a top 5 and a bottom 7.

The package bottom 7 is filled with the semi-fluid or fluid admixture 8 by any suitable means, and is capped with the package top 5. A mechanical seal in the form of an indentation ring can be formed by conventional means in a location where the top 5 and bottom 7 overlap, such as at 9, to secure the package top 5 to the package bottom 7. Alternatively or in addition, an outer bonding seal can be formed at 11 with the use of a suitable adhesive, or with wax.

Upon the addition of the closed package containing admixture to a cementitious composition under the influence of mechanical agitation, the contents of the package are released and are then uniformly distributed into the cementitious system.

Two piece capsules, such as gelatin capsules, can suffer the disadvantage of leakage of fluid and semi-fluid admixtures at the junction between the top and bottom capsule sections. Although the outer bonding seal mentioned above can often be used to alleviate this problem, the resultant completely sealed capsule cannot vent any internal pressure and, thus, may crack or rupture prematurely. This may be a recurrent problem, especially when the admixture is reactive with the gelatin and the reaction produces gaseous by-products.

Accordingly, the aforementioned problems are overcome by employing wax capsules in which the wax is chemically inert to the encapsulated contents. The wax capsules are completely sealed, but do not have the tendency of gelatin capsules to crack or rupture. It has been found that the wax capsules satisfactorily dispense the encapsulated admixture under the influence of mechanical agitation, and that the residual wax in the cementitious mix is not deleterious.

The wax capsules can be made by conventional molding techniques, whereby a wax melt is hot molded and an opening is provided for introduction of the admixture into the molded capsule. The admixture is introduced after the wax has cooled. The opening is then sealed with a plug of the same or a different wax, using conventional heat sealing techniques. Preferably, this creates a monolithic, essentially seamless housing for the admixture. Any suitable wax, such as paraffin wax, or mixture of waxes can be used. The wax compositions may include additives to modify the properties of the capsule. For example, polymers such as ethylene vinyl acetate may be added to modify the brittleness or plasticity of the wax. Preferred wax capsules are those having a wall thickness of 1.6 to 9.5 mm (1/16 to 3/8 inch).

In view of the fact that the need for conventional hardware for dispensing fluid or semi-fluid admixtures is alleviated by the present invention, it is now possible to formulate the admixtures in high concentration. An important application of the encapsulated fluid or semi-fluid admixtures of the present invention is in dosing cementitious mixtures in large batch-type mixing vessels such as ready-mix trucks. To that end, the present invention contemplates the use of large capsules to hold admixture amounts sufficient to dose the various amounts of cementitious compositions typically present in such vessels. Capsules typically used in veterinary applications have been found to be suitable. Preferably, the capsules are of such size as to hold at least about 14 ml (0.5 fluid ounces) of admixture, most preferably about 29 ml (1 fluid ounce) of admixture. For entraining air in volumes of 20 to 30% in grout mixtures, about 3 such 29 ml (1 fluid ounce) capsules containing the air-entraining agent are generally necessary to dose about one cubic yard of grout. The capsule can be hand-filled, or can be filled by using conventional apparatus typically used in filling capsules for the pharmaceutical industry.

The capsules of the present invention can be fabricated in any shape, the only limitation being the fill opening of the vessel in which they are being added. Suitable shapes include bullet, football, etc.

In its method aspects, the present invention provides for the introduction of an encapsulated admixture inside a batch-type cementitious mixer drum via the drum opening. This may be accomplished prior to the introduction of the other components of the cementitious composition, during the introduction of the other components, after the introduction, or any combination of the three. Suitable time should be allowed to allow the capsule to rupture, shatter or disintegrate, as the case may be, and the encapsulated material to enter the system. Suitable time should thereafter be allowed to allow the admixture to uniformly distribute in the cementitious mixture.

In order that the invention be better understood, it will now be described with reference to the following examples.

### EXAMPLE 1 (Comparison)

### Air Entrainment for Controlled Low Strength Material

Material for air entrainment such as a fatty acid ester having a viscosity index of 390 at 38°C (100°F) is placed in gelatin capsules such as those supplied to Torpac, Inc. (New York, New York). The capsules are in two parts with one mechanically inter-locking with the other to provide a seal therebetween. The admixture is added to a first part of the capsule and the other part is placed over the first part to encapsulate the admixture therein. An additional seal comprised of gelatin, wax, or an adhesive binds the tops covering half edge to the outside wall of the bottom inserted half. (Capsules containing the admixture should be stored between 4 and 27°C (40 and 80°F) in 20 to 50% relative humidity).

The capsules are added to a cementitious mixture such as in a ready-mix truck, and the mixing process is continued for a period of time necessary to ensure that the admixture enters the cementitious system. Longer periods of time are necessary for smaller size mixtures, or when the mixer is of low power. The capsules swell and fatigue during the mixing process, and eventually rupture and disintegrate, thus allowing the admixture to disperse and function in the intended fashion.

### EXAMPLE 2

A two piece, egg-shaped metal mold, measuring about 79 mm (3-1/8 inches) high and 54 mm (2-1/8 inches) wide, was filled through an opening at one end of the mold with a wax melt composition containing 75% by weight of 143-145 paraffin wax, 12.5% by weight of 155 white microwax, and 12.5% by weight of ethylene vinyl acetate. The filled mold was allowed to stand at room temperature for a time sufficient to solidify the wax at the periphery of the melt (about 10 minutes), and the remaining wax melt was then poured out of the mold. 85 ml (3 fluid ounces) of a fatty acid ester air-entraining admixture were then dispensed into the mold through the opening, filling the molded wax capsule. An additional amount of the wax melt was then floated onto the admixture, filling the opening at the top of the wax capsule, cooled to form an essentially seamless closure, and the metal mold was then broken apart and removed. The average wall thickness of the wax capsule was about 6 mm (1/4 inch).

When added to a cement slurry in a rotating mixer, the capsule ruptured and released the air entrainer into the slurry.

## Claims

1. An encapsulated semi-fluid or fluid admixture for cementitious compositions, comprising a capsule body formed of a wax which is inert to the admixture, and which allows for the emission of the admixture into a cementitious mixture when placed in the mixture and subjected to mechanical agitation therein and a semi-fluid or fluid admixture contained within the capsule body.

2. An encapsulated admixture according to claim 1, wherein the capsule body comprises a capsule top and a capsule bottom mechanically sealed to one another.

3. An encapsulated admixture according to claim 1, wherein the capsule body is essentially seamless.

4. An encapsulated admixture according to any one of the preceding claims, wherein the capsule body holds at least 14 ml (0.5 fluid ounces) of semi-fluid or fluid admixture.

5. An encapsulated admixture according to any one of the preceding claims, wherein the capsule body has a wall thickness of 1.6 to 9.5 mm (1/16 to 3/8 inch).

6. An encapsulated admixture according to any one of the preceding claims, wherein the emission of the admixture is caused by the rupturing, shattering or disintegration of the capsule body.

7. An encapsulated admixture according to any one of the preceding claims, wherein the admixture comprises a fatty acid ester air-entraining agent.

8. A method of dispensing a semi-fluid or fluid admixture into a cementitious composition, which method comprises introducing into the cementitious composition a capsule formed of a wax containing the admixture and inert thereto and providing sufficient agitation to cause the emission of the admixture from the capsule and into the cementitious composition.

9. A method according to claim 8, wherein the capsule is as defined according to any one of claims 2 to 7.

## Patentansprüche

1. Gekapselte halbflüssige oder flüssige Zumischung für zementartige Zusammensetzungen, die einen aus einem gegenüber der Zumischung inerten Wachs gebildeten Kapselkörper, der das Austreten der Zumischung in eine zementartige Mischung zuläßt, wenn er in die Mischung gegeben und dort mechanischer Durchmischung unterworfen wird, und eine in dem Kapselkörper enthaltene halbflüssige oder flüssige Zumischung umfaßt.

2. Gekapselte Zumischung nach Anspruch 1, bei der der Kapselkörper ein Kapseloberteil und ein Kapselunterteil umfaßt, die mechanisch miteinander verschlossen sind.

3. Gekapselte Zumischung nach Anspruch 1, bei der der Kapselkörper im wesentlichen nahtlos ist.

4. Gekapselte Zumischung nach einem der vorhergehenden Ansprüche, bei der der Kapselkörper mindestens 14 ml (0,5 flüssige Unzen (ounces)) der halbflüssigen oder flüssigen Mischung enthält.

5. Gekapselte Zumischung nach einem der vorhergehenden Ansprüche, bei der der Kapselkörper eine Wandstärke von 1,6 bis 9,5 mm (1/16 bis 3/8 Zoll) aufweist.

6. Gekapselte Zumischung nach einem der vorhergehenden Ansprüche, bei der die Abgabe der Zumischung durch Einreißen, Zertrümmern oder Zerfall des Kapselkörpers verursacht wird.

7. Gekapselte Zumischung nach einem der vorhergehenden Ansprüche, wobei die Zumischung einen Fettsäureester als Luftporenbildner umfaßt.

8. Verfahren zum Abgeben einer halbflüssigen oder flüssigen Zumischung in eine zementartige Zusammensetzung, bei dem in die zementartige Zusammensetzung eine aus einem Wachs gebildete Kapsel eingebracht wird, die die Zumischung enthält und dieser gegenüber inert ist, und für eine ausreichende Durchmischung gesorgt wird, um das Austreten der Zumischung aus der Kapsel und in die zementartige Zusammensetzung zu bewirken.

9. Verfahren nach Anspruch 8, bei dem die Kapsel eine Kapsel wie in einem der Ansprüche 2 bis 7 angegeben ist.

## Revendications

1. Additif encapsulé fluide ou semi-fluide pour des compositions de ciment, comprenant un corps de capsule formé d'une cire qui est inerte vis-à-vis de l'additif, et qui permet l'émission de l'additif dans un mélange de ciment lorsqu'il est placé dans le mélange et soumis à une agitation mécanique dans celui-ci, ainsi qu'un additif fluide ou semi-fluide contenu dans le corps de capsule.

2. Additif encapsulé selon la revendication 1, caractérisé en ce que le corps de capsule comprend un sommet de capsule et un fond de capsule mécaniquement scellés l'un à l'autre.

3. Additif encapsulé selon la revendication 1, caractérisé en ce que le corps de capsule est essentiellement dépourvu de ligne de jonction.

4. Additif encapsulé selon l'une des revendications précédentes, caractérisé en ce que le corps de capsule contient au moins 14 ml (0,5 once de fluide) d'additif fluide ou-semi-fluide.

5. Additif encapsulé selon l'une quelconque des revendications précédentes, caractérisé en ce que le corps de capsule possède une épaisseur de paroi de 1,6 à 9,5 mm (1/16 à 3/8 pouce).

6. Additif encapsulé selon l'une quelconque des revendications précédentes, caractérisé en ce que l'émission de l'additif est causée par la rupture, l'explosion ou la désintégration du corps de capsule.

7. Additif encapsulé selon l'une quelconque des revendications précédentes, caractérisé en ce que l'additif comprend un agent ester d'acide gras d'entraînement d'air.

8. Procédé de distribution d'un additif fluide ou semi-fluide dans une composition de ciment, lequel procédé consiste à introduire dans la composition de ciment une capsule formée d'une cire contenant l'additif et à réaliser une agitation suffisante pour provoquer l'émission de l'additif depuis la capsule et dans la composition de ciment.

9. Procédé selon la revendication 8, caractérisé en ce que la capsule est telle que définie selon l'une quelconque des revendications 2 à 7.
